# FASCICULE DE BREVET EUROPEEN

(11) **EP 1 240 066 B1**
(45) Date de publication et mention de la délivrance du brevet: **28.04.2004**
(21) Numéro de dépôt: 00988931.2
(22) Date de dépôt: 15.12.2000
(51) Int. Cl.: B62D 25/20

(54) **HABITACLE RENFORCE DE VEHICULE AUTOMOBILE**
VERSTÄRKTES KRAFTFAHRZEUGINNENRAUM
REINFORCED AUTOMOBILE PASSENGER COMPARTMENT

(30) Priorité: 21.12.1999 FR 9916184
(43) Date de publication de la demande: 18.09.2002
(73) Titulaire: Renault s.a.s., 92100 Boulogne Billancourt (FR)
(72) Inventeur: ALLERA, Rodolphe, F-91770 Saint Vrain (FR)
(86) Numéro de dépôt international: PCT/FR2000/003553
(87) Numéro de publication internationale: WO 2001/045999

(56) Documents cités:
- EP-A- 0 949 138
- DE-A- 19 627 610
- DE-A- 19 709 314
- FR-A- 2 424 146

## Description

L'invention concerne un habitacle de véhicule automobile.

L'invention concerne plus particulièrement un habitacle de véhicule automobile, de véhicule automobile, du type qui comporte au moins un élément central inférieur de structure de caisse portant au moins une paire d'éléments d'aménagement intérieur agencés transversalement de part et d'autre d'un plan longitudinal médian de symétrie, du type dans lequel l'élément central inférieur de structure de caisse est constitué d'au moins deux éléments de plancher sensiblement horizontaux réunis par l'intermédiaire d'un tunnel longitudinal central du véhicule et de part et d'autre desquels sont agencés deux caissons longitudinaux de la structure du véhicule, du type dans lequel chacun desdits éléments d'aménagement intérieur surplombe un élément sensiblement horizontal de plancher associé et est fixé sur une partie supérieure du tunnel et sur une surface intérieure du caisson par l'intermédiaire d'un premier et d'un deuxième éléments longitudinaux de fixation associés.

On connaît de nombreux exemples d'habitacles de véhicule automobile de ce type.

Le document DE-A-19627610 décrit un renfort localisé transversalement entre la base du tunnel et la base d'un côté de la structure de bas-volet

La plupart des véhicules à caisse dite "autoporteuse" comportent un habitacle de ce type dans lequel l'élément central inférieur de structure de caisse est réalisé à partir d'une plaque d'acier qui est emboutie de façon à former d'un seul tenant les deux éléments longitudinaux de plancher réunis par le tunnel longitudinal central en "U inversé" du véhicule, de part et d'autre desquels deux parois sensiblement verticales forment une partie des caissons longitudinaux.

Des sièges sont généralement montés au droit de chacun des éléments longitudinaux de plancher, chaque siège reposant sur des glissières qui sont par exemple montées respectivement sur la face verticale intérieure du caisson longitudinal et sur la face horizontale supérieure du tunnel.

De la sorte, chaque siège est sensiblement reçu transversalement dans une "cuvette" délimitée par le tunnel et par la face verticale intérieure du caisson associé.

Par ailleurs, la structure du siège est conventionnellement une structure légère qui est principalement destinée à proposer un confort optimal à son occupant.

L'inconvénient d'une telle conception réside dans la faible résistance à l'écrasement de l'élément central inférieur lorsque la caisse du véhicule est soumise à un choc transversal.

En effet, on a constaté que, lors d'un choc latéral, en l'absence de renforts, la cuvette constituait une zone privilégiée de déformations, ce qui pouvait conduire à un écrasement partiel du siège et de son occupant.

Pour remédier à cet inconvénient, on a proposé une conception selon laquelle des traverses sont agencées sur ou sous l'élément longitudinal de plancher et selon laquelle le tunnel est doublé par un élément de rigidité de forme complémentaire.

Cette conception améliore la résistance de la caisse du véhicule à un choc transversal, mais se révèle encombrante et conduit à alourdir considérablement la caisse du véhicule.

Pour remédier à ces inconvénients, l'invention propose une conception légère permettant de reporter les efforts résultant d'un choc latéral d'une cuvette à l'autre, et de limiter ainsi les déformations.

Dans ce but, l'invention propose un habitacle de véhicule automobile du type décrit précédemment, caractérisé en ce qu'il comporte, de chaque côté du tunnel, au moins une traverse qui s'étend transversalement entre le caisson et la partie supérieure du tunnel et qui est destinée à participer à la rigidité transversale de l'habitacle du véhicule en transmettant les efforts résultant d'un choc transversal d'un côté du véhicule à l'autre.

Selon d'autres caractéristiques de l'invention :
- chaque traverse est fixée sur le caisson associé au ras de l'élément de plancher correspondant ;
- la traverse est fixée à chacune de ses extrémités respectivement directement sur la partie supérieure du tunnel du tunnel et directement sur la surface intérieure correspondante du caisson ;
- la traverse est fixée à chacune de ses extrémités respectivement sur les premier et deuxième éléments latéraux de fixation de l'élément d'aménagement ;
- lors de l'assemblage du véhicule, la traverse est fixée aux éléments latéraux de fixation de l'élément d'aménagement intérieur, puis l'élément d'aménagement intérieur est rapporté puis fixé d'un seul tenant sur l'élément central inférieur de structure de caisse ;
- lors de l'assemblage du véhicule, la traverse est soudée aux éléments latéraux de fixation de l'élément d'aménagement intérieur ;
- la traverse est une barre rectiligne ;
- la traverse est réalisée en un alliage de magnésium ;
- la traverse est tubulaire.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un élément inférieur de structure de caisse équipé d'un siège et conforme à un état antérieur de la technique ;
- la figure 2 est une vue en perspective d'un élément inférieur de structure de caisse équipé d'un siège et conforme à l'invention ;
- la figure 3 est une vue de détail selon la figure 2 d'un premier mode de réalisation de l'élément de structure de caisse selon l'invention ;
- la figure 4 est une vue de détail selon la figure 2 d'un second mode de réalisation de l'élément de structure de caisse selon l'invention ;
- la figure 5 est une vue de détail selon la figure 1 de l'élément inférieur de structure de caisse selon l'état antérieur de la technique.

Dans la description qui va suivre, des chiffres de référence identiques désignent des pièces identiques ou ayant des fonctions similaires.

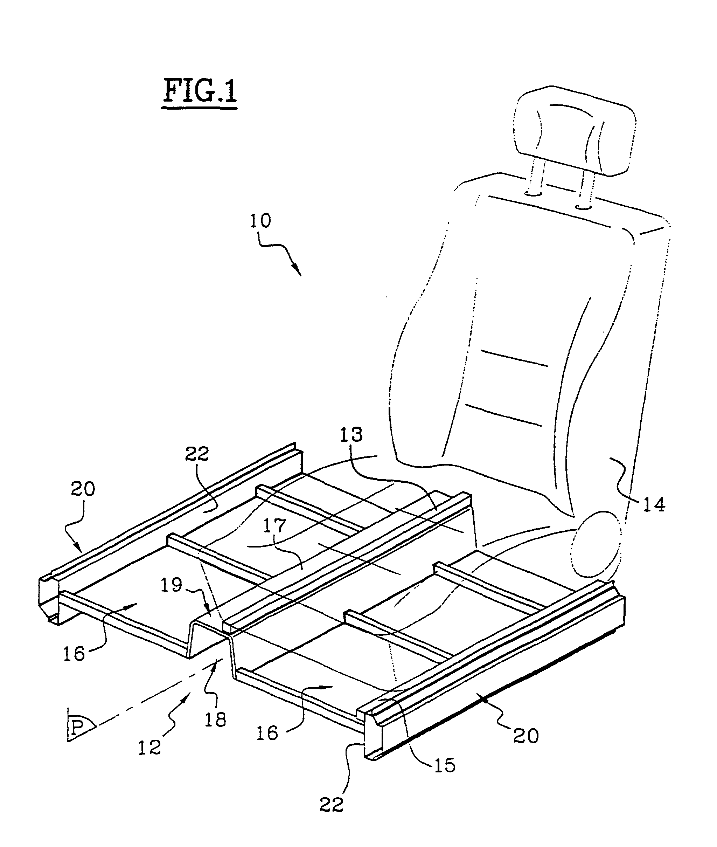

On a représenté à la figure 1 une partie 10 inférieure d'un habitacle (non représenté) de véhicule automobile conforme à un état antérieur de la technique.

De manière connue, la partie 10 comporte au moins un élément 12 central inférieur de structure de caisse qui porte au moins une paire d'éléments d'aménagement intérieur du type du siège 14 qui a été représenté à la figure 1.

Cette disposition n'est pas limitative de l'invention, et l'élément 12 inférieur peut comporter sur un même rangée transversale plus de deux éléments d'aménagement intérieurs, constitués chacun par exemple d'un siège 14, d'une table, ou encore d'un coffre de rangement.

En particulier, comme l'illustre la figure 1, les sièges 14 sont agencés transversalement de part et d'autre d'un plan "P" longitudinal médian de symétrie.

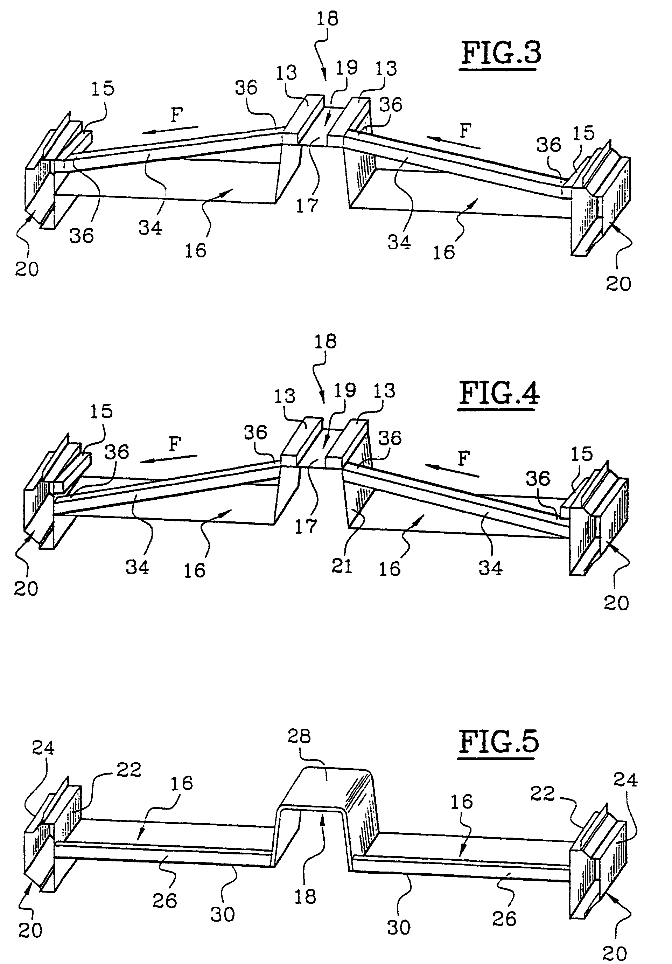

Comme l'illustre la figure 1 et plus particulièrement la figure 5, l'élément central 12 inférieur de structure de caisse est constitué de deux éléments 16 de plancher horizontaux qui sont réunis par l'intermédiaire d'un tunnel 18 longitudinal central du véhicule, en "U inversé" et par deux caissons 20 longitudinaux de la structure du véhicule qui sont agencés de part et d'autre des éléments 16 de plancher horizontaux.

En particulier, comme c'est notamment le cas pour la plupart des véhicules automobiles dits "à caisse autoporteuse", c'est à dire dont la caisse porte tous les organes mécaniques, l'élément 12 inférieur de structure de caisse est réalisé par emboutissage d'un plaque de tôle en matériau métallique de manière à former d'un seul tenant un ensemble comprenant les deux éléments 16 de plancher horizontaux, le tunnel 18, et deux surfaces intérieures 22. notamment verticales, des caissons 20. Deux coques longitudinales 24, dites "bas de caisse" sont ensuite rapportées et soudées les surfaces intérieures 22 pour former les caissons 20 définitifs.

Comme l'illustre la figure 1, chacun des éléments d'aménagement intérieur ou sièges 14 surplombe un élément 16 sensiblement horizontal de plancher associé et est fixé sur une partie supérieure 19 du tunnel 18, par exemple sur une surface 17 horizontale supérieure du tunnel 18, et sur une des surfaces intérieures 22 associée du caisson 20 par l'intermédiaire d'un premier élément longitudinal 13 et d'un deuxième élément longitudinal 15 de fixation associés, notamment par une première glissière 13 et par une deuxième glissière 15 qui permettent un réglage longitudinal de la position du siège 14.

Comme l'illustre la figure 5, pour assurer la rigidité de l'élément 12 inférieur de structure de caisse en cas de choc latéral, celui-ci est conventionnellement équipé de traverses 26 de renfort qui sont agencées sur les éléments 16 horizontaux de plancher entre le tunnel 18 et les surfaces intérieures 22 du tunnel 18.

Par ailleurs, le tunnel 18 est doublé extérieurement par un renfort 28 qui présente aussi une forme en "U inversé".

Cette conception permet de renforcer l'élément 12 inférieur de structure de caisse de manière satisfaisante, mais présente l'inconvénient de se révéler lourde et encombrante.

En particulier, si le véhicule est conçu de façon que ses éléments 16 sensiblement horizontaux de plancher soient lisses sous leurs faces inférieures 30, par exemple pour des raisons aérodynamiques, les traverses 26 sont nécessairement agencées sur les faces supérieures 32 des éléments 16 sensiblement horizontaux de plancher.

Cette disposition complique notablement l'implantation d'équipements longitudinaux (non représentés) du véhicule tels que des conduits de climatisation ou des faisceaux électriques. qui doivent alors nécessairement chevaucher les traverses 26.

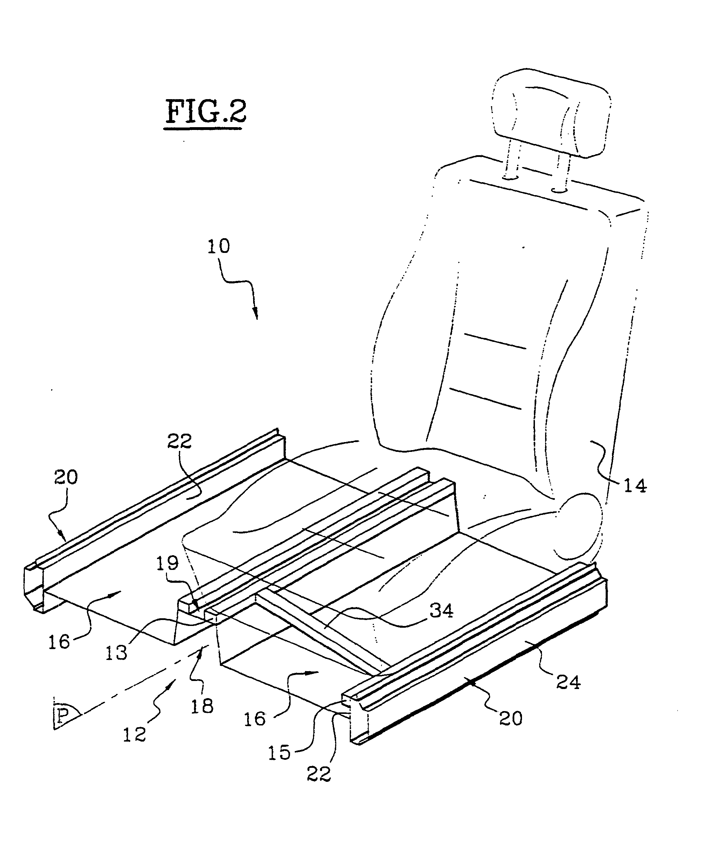

Pour remédier à cet inconvénient, l'invention propose un élément 12 inférieur de structure de caisse qui comporte de chaque côté du tunnel 18, comme illustré à la figure 2, au moins une traverse 34 qui s'étend transversalement entre le caisson 20 et la partie supérieure 19 du tunnel et qui est destinée à participer à la rigidité transversale de l'habitacle du véhicule en transmettant les efforts résultant d'un choc transversal d'un côté du véhicule à l'autre.

Comme l'illustre la figure 3, selon un premier mode de réalisation de l'invention la traverse 34 est fixée à chacune de ses extrémités 36 respectivement sur les premier et deuxième éléments latéraux de fixation de l'élément d'aménagement, c'est à dire notamment sur les glissières 13 et 15 du siège 14.

Dans le mode de réalisation préféré de l'invention, et de façon non limitative celle-ci, la traverse 34 est notamment une traverse de forme droite tubulaire, qui est réalisée en un alliage de magnésium et qui est soudée sur les glissières 13 et 15 des sièges 14 avant le montage des desdits sièges 14.

Cette disposition est particulièrement avantageuse, car le montage de la traverse entre les glissières 13 et 15 permet de rigidifier la caisson 20 et de limiter ses déformations en cas de choc.

De plus cette disposition ne nécessite aucune opération supplémentaire lors de la réalisation de l'élément 12 de structure de caisse. En effet, lors du montage à la chaîne du véhicule automobile, la traverse 34 et les sièges 14, qui sont livrés par un fournisseur, sont directement montés sur la caisse du véhicule.

Par ailleurs, la configuration représentée à la figure 3 n'est pas limitative de l'invention. En effet, chaque siège 14 peut comporter plusieurs traverses 34 parallèles, ou encore des traverses 34 de formes différentes, en forme de plaques triangulaires, ou des traverses 34 légèrement incurvées.

D'une façon analogue, les traverses 34 peuvent être des barres pleines, des profilés ouverts, ou encore être réalisées dans un matériau autre qu'un alliage de magnésium, notamment en aluminium, et elles peuvent aussi ne pas être soudées sur les glissières 13 et 15, mais y être fixées à l'aide de fixations adéquates, notamment des fixations par des vis et boulons.

Comme l'illustre la figure 4, selon un second mode de réalisation de l'invention, la traverse 34 est fixée à chacune de ses extrémités 36 respectivement sur la partie supérieure 19 du tunnel 18 et sur la surface 22 intérieure correspondante du caisson 20. Dans le cas représenté à la figure 4, la traverse 34 est fixée sur une face latérale 21 de la partie supérieure 19 du tunnel 18, à proximité immédiate d'une surface 17 horizontale supérieure du tunnel 18 qui porte la glissière 13.

Cette disposition est particulièrement avantageuse car elle permet notamment de rigidifier l'élément 12 de structure de caisse à des endroits qui ne sont par exemple pas destinés à recevoir des éléments d'aménagement intérieur tels que les sièges 14, par exemple sous une banquette arrière du véhicule.

Dans cette configuration, la traverse 34 est fixée par soudage ou par un autre procédé de fixation directement sur la partie supérieure 19 du tunnel 18 et sur la surface 22 intérieure correspondante du caisson 20 lors des opérations d'assemblage ou "ferrage" de la caisse du véhicule.

Dans les deux modes de réalisation décrits précédemment, la traverse 34 est fixée du côté du caisson 20 au ras de l'élément 16 de plancher de manière à limiter tout risque de déformation dudit élément 16 en dessous de la traverse 34.

De la sorte, les traverses 34 alignées permettent de conduire les efforts résultant d'un choc latéral venant de la droite des figures 3 et 4, et qui sont représentés par les flèches "F", d'un côté du véhicule à l'autre. Les efforts sont conduits par les traverses 34 d'un caisson 20 à l'autre sans réduire l'espace disponible pour les sièges 14, ce qui permet de préserver leurs occupants d'éventuelles lésions. La seule zone de l'élément 12 de structure de caisse restant susceptible de déformation est tout au plus la zone de la partie 19 supérieure du tunnel 18 qui est comprise entre les glissières 13 du siège, zone dont la déformation ne présente que qu'un danger minime pour les occupants des sièges 14.

Enfin, en variante (non représentée), la glissière 15 du siège 14 peut être agencée à proximité immédiate de la traverse 34, c'est à dire au ras de l'élément 16 de plancher, de façon qu'en cas de choc, toute déformation du caisson 20 conduise le siège à venir en appui sur la traverse 34, ce qui permet avantageusement de limiter les déplacement s verticaux du siège 34.

Il sera compris que, pour les deux modes de réalisation décrits précédemment, l'élément 12 de structure de caisse ne nécessite pas de traverse de renfort du type des traverses 26 telles que décrites à la figure 4, pas plus qu'il ne nécessite de renfort 28 coiffant le tunnel 18, la résistance aux chocs latéraux de l'élément 12 de structure de caisse étant assurée par les traverses 34.

L'invention permet donc de bénéficier d'un habitacle de véhicule automobile hautement résistant aux chocs latéraux.

## Revendications

1. Habitacle (10) de véhicule automobile, du type qui comporte au moins un élément (12) central inférieur de structure de caisse portant au moins une paire d'éléments (14) d'aménagement intérieur agencés transversalement de part et d'autre d'un plan (P) longitudinal médian de symétrie, du type dans lequel l'élément (12) central inférieur de structure de caisse est constitué d'au moins deux éléments (16) de plancher sensiblement horizontaux réunis par l'intermédiaire d'un tunnel (18) longitudinal central du véhicule et de part et d'autre desquels sont agencés deux caissons (20) longitudinaux de la structure du véhicule, du type dans lequel chacun desdits éléments (14) d'aménagement intérieur surplombe un élément (16) sensiblement horizontal de plancher associé et est fixé sur une partie (19) supérieure du tunnel (18) et sur une surface (22) intérieure du caisson (20) par l'intermédiaire d'un premier (13) et d'un deuxième (15) éléments longitudinaux de fixation associés,
**caractérisé en ce qu'**il comporte, de chaque côté du tunnel (18), au moins une traverse (34) qui s'étend transversalement entre le caisson (20) et la partie (19) supérieure du tunnel (18) et qui est destinée à participer à la rigidité transversale de l'habitacle du véhicule en transmettant les efforts (F) résultant d'un choc transversal d'un côté du véhicule à l'autre.

2. Habitacle (10) selon la revendication précédente, **caractérisé en ce que** chaque traverse (34) est fixée sur le caisson (20) associé au ras de l'élément (16) de plancher correspondant.

3. Habitacle (10) de véhicule automobile selon la revendication précédente, **caractérisé en ce que** la traverse (34) est fixée à chacune de ses extrémités (36) respectivement directement sur la partie (19) supérieure du tunnel (18) du tunnel et directement sur la surface (22) intérieure correspondante du caisson (20).

4. Habitacle (10) selon la revendication 2, **caractérisé en ce que** la traverse (34) est fixée à chacune de ses extrémités (36) respectivement sur les premier (13) et deuxième (15) éléments latéraux de fixation de l'élément (14) d'aménagement.

5. Habitacle (10) selon la revendication précédente, **caractérisé en ce que**, lors de l'assemblage du véhicule, la traverse (34) est fixée aux éléments (13, 15) latéraux de fixation de l'élément (14) d'aménagement intérieur, puis **en ce que** l'élément (14) d'aménagement intérieur est rapporté puis fixé d'un seul tenant sur l'élément (12) central inférieur de structure de caisse.

6. Habitacle (10) selon la revendication précédente, **caractérisé en ce que**, lors de l'assemblage du véhicule, la traverse (34) est soudée aux éléments (13, 15) latéraux de fixation de l'élément (14) d'aménagement intérieur.

7. Habitacle (10) selon l'une quelconque des revendications précédentes, **caractérisé en ce que** la traverse (34) est une barre rectiligne.

8. Habitacle (10) selon l'une quelconque des revendications précédentes, **caractérisé en ce que** la traverse (34) est réalisée en un alliage de magnésium.

9. Habitacle (10) selon l'une quelconque des revendications précédentes, **caractérisé en ce que** la traverse (34) est tubulaire.

## Patentansprüche

1. Karosseriegehäuse (10) eines Kraftfahrzeugs von der Art, welches mindestens ein zentrales, unteres Element (12) einer Kastenkonstruktion aufweist, welches mindestens ein Paar von inneren Einrichtungselementen (14) trägt, welche transversal beiderseits einer longitudinalen Symmetriemittelebene (P) aufgebaut sind, von der Art, in welcher das zentrale, untere Element (12) einer Kastenstruktur aus mindestens zwei, imWesentlichen horizontalen Elementen (16) des Bodens gebildet ist, welche mittels eines longitudinalen, zentralen Tunnels (18) des Fahrzeugs miteinander verbunden sind, und von denen beiderseits zwei longitudinale Kästen (20) der Konstruktion des Fahrzeugs von dem Typ vorgesehen sind, in welchem die inneren Einrichtungselemente (14) ein im Wesentlichen horizontales Element (16) des zugehörigen Bodens überlagern, und welcher auf einem oberen Teil (19) des Tunnels (18) und über einer inneren Struktur (22) des Kastens (20) mittels eines ersten (13) und eines zweiten (15) longitudinalen, zugehörigen Befestigungselements befestigt ist,
**dadurch gekennzeichnet, dass**
es auf jeder Seite des Tunnels (18) mindestens einen Querträger (34) aufweist, der sich transversal zwischen dem Kasten (20) und dem oberen Teil (19) des Tunnels (18) erstreckt, und welcher dafür bestimmt ist, an der transversalen Steifigkeit des Karosseriegehäuses des Fahrzeugs unter einem Übertragen von Kräften (F), welche von einem transversalen Stoß von einer Seite des Fahrzeugs herkommen, zu der anderen, teilzuhaben.

2. Karosseriegehäuse (10) gemäß dem vorangegangenen Anspruch, **dadurch gekennzeichnet, dass** jeder Querträger (34) an dem zugehörigen Kasten (20) in gleicher Höhe an dem entsprechenden Element (16) des Bodens befestigt ist.

3. Karosseriegehäuse (10) eines Kraftfahrzeugs gemäß dem vorangegangenen Anspruch, **dadurch gekennzeichnet, dass** der Querträger (34) an jedem seiner Enden (36) jeweils direkt an dem oberen Teil (19) des Tunnels (18) des Tunnels und direkt an der entsprechenden inneren Oberfläche (22) des Kastens (20) befestigt ist.

4. Karosseriegehäuse (10) gemäß Anspruch 2, **dadurch gekennzeichnet, dass** der Querträger (34) an jedem seiner Enden (36) jeweils an dem ersten (13) und dem zweiten (15) seitlichen Befestigungselement des Einrichtungselements (14) befestigt ist.

5. Karosseriegehäuse (10) gemäß dem vorangegangenen Anspruch, **dadurch gekennzeichnet, dass** während der Montage des Fahrzeugs der Querträger (34) an den seitlichen Befestigungselementen (13, 15) des inneren Einrichtungselements (14) befestigt wird, dass sodann das innere Einrichtungselement (14) angefügt und dann in einem Stück an dem zentralen unteren Element (12) der Kastenkonstruktion befestigt wird.

6. Karosseriegehäuse (10) gemäß dem vorangegangenen Anspruch, **dadurch gekennzeichnet, dass** während der Montage des Fahrzeugs der Querträger (34) an den seitlichen Befestigungselementen (13, 15) des inneren Einrichtungselements (14) angeschweißt wird.

7. Karosseriegehäuse (10) gemäß irgendeinem der vorangegangenen Ansprüche, **dadurch gekennzeichnet, dass** der Querträger (34) eine gerade Stange ist.

8. Karosseriegehäuse (10) gemäß irgendeinem der vorangegangenen Ansprüche, **dadurch gekennzeichnet, dass** der Querträger (34) aus einer Magnesiumlegierung verwirklicht ist.

9. Karosseriegehäuse (10) gemäß irgendeinem der vorangegangenen Ansprüche, **dadurch gekennzeichnet, dass** der Querträger (34) röhrenförmig ist.

## Claims

1. A passenger space (10) of an automobile vehicle of the type comprising at least one lower central bodywork structure member (12) bearing at least a pair of internal fitting members (14) disposed transversely on either side of a median longitudinal plane of symmetry (P), of the type in which the lower central bodywork structure member (12) is formed by at least two substantially horizontal floor members (16) joined by means of a central longitudinal tunnel (18) of the vehicle and on either side of which two longitudinal casings (20) of the vehicle structure are disposed, of the type in which each of the internal fitting members (14) overhangs an associated substantially horizontal floor member (16) and is secured on an upper portion (19) of the tunnel (18) and on an internal surface (22) of the casing (20) by means of a first (13) and a second (15) associated longitudinal fastening member, **characterised in that** it comprises, on either side of the tunnel (18), at least one crossbar (34) which extends transversely between the casing (20) and the upper portion (19) of the tunnel (18) and which is adapted to improve the transverse rigidity of the passenger space of the vehicle by transmitting the forces (F) resulting from a transverse impact from one side of the vehicle to the other.

2. A passenger space (10) as claimed in the preceding claim, **characterised in that** each crossbar (34) is secured on the associated casing (20) flush with the corresponding floor member (16).

3. A passenger space (10) of an automobile vehicle as claimed in the preceding claim, **characterised in that** the crossbar (34) is secured at each of its ends (36) respectively directly on the upper portion (19) of the tunnel (18) and directly on the corresponding inner surface (22) of the casing (20.

4. A passenger space (10) as claimed in claim 2, **characterised in that** the crossbar (34) is secured at each of its ends (36) respectively to the first (13) and the second (15) lateral fastening members of the fitting member (14).

5. A passenger space (10) as claimed in the preceding claim, **characterised in that**, during assembly of the vehicle, the crossbar (34) is secured to the lateral fastening members (13, 15) of the internal fitting member (14), then the internal fitting member (14) is inserted and then secured in one piece with the lower central bodywork structure member (12).

6. A passenger space (10) as claimed in the preceding claim, **characterised in that**, during assembly of the vehicle, the crossbar (34) is welded to the lateral fastening members (13, 15) of the internal fitting member (14).

7. A passenger space (10) as claimed in any one of the preceding claims, **characterised in that** the crossbar (34) is a rectilinear bar.

8. A passenger space (10) as claimed in any one of the preceding claims, **characterised in that** the crossbar (34) is made from a magnesium alloy.

9. A passenger space (10) as claimed in any one of the preceding claims, **characterised in that** the crossbar (34) is tubular.
